# EUROPÄISCHE PATENTSCHRIFT

(11) **EP 2 886 357 B1**
(45) Veröffentlichungstag und Bekanntmachung des Hinweises auf die Patenterteilung: **09.08.2017**
(21) Anmeldenummer: 14004064.3
(22) Anmeldetag: 02.12.2014
(51) Int. Cl.: B41M 3/14, B42D 25/324, B42D 25/378, B42D 25/21, B32B 37/18, B32B 37/24, B42D 25/425, B42D 25/369, B42D 25/328, B42D 25/47, B42D 25/373, B42D 25/455, B42D 25/46

(54) **Sicherheitsdokument sowie Verfahren zum Herstellen eines Sicherheitsdokuments**
Security document and method for the production of a security document
Document de sécurité et procédé de fabrication d'un document de sécurité

(30) Priorität: 20.12.2013 DE 102013021964
(43) Veröffentlichungstag der Anmeldung: 24.06.2015
(73) Patentinhaber: Giesecke & Devrient GmbH, 81677 München (DE)
(72) Erfinder: Endres, Günter, 81547 München (DE)

(56) Entgegenhaltungen:
- DE-A1-102005 045 567
- DE-A1-102009 007 778
- US-A1- 2011 020 606

## Beschreibung

Die Erfindung betrifft ein Sicherheitsdokument mit einem aus mehreren Folien hergestellten monolithischen Laminatkörper sowie ein Verfahren zum Herstellen eines Sicherheitsdokuments. Derartige Sicherheitsdokumente werden oft auch als Verbundsicherheitsdokumente oder allgemein als Datenträger bezeichnet. In solche Sicherheitsdokumente können eine Vielzahl von Sicherheitsmerkmalen eingearbeitet werden, so dass diese als Identifikationsdokumente, z. B. als Personalausweise, Führerscheine, aber auch bei Reisepässen sowie weiteren Dokumenten zum Einsatz kommen, bei denen auf eine hohe Fälschungssicherheit Wert gelegt wird.

Der monolithische Laminatkörper besteht aus mehreren in einem Laminationsprozess zu einem monolithischen Block verschmolzenen Schichtfolien. Die Sicherheitsdokumente weisen in der Regel quer zu einer Schichtungsrichtung der einzelnen Folien, die aufeinander laminiert werden, eine größere Ausdehnung auf als entlang der Schichtungsrichtung. Häufig liegen die Sicherheitsdokumente in Kartenform vor und werden als Chipkarten, insbesondere als Bankkarten, Kredit- oder Debitkarten, Bonuskarten und ähnliches eingesetzt. Derartige Chipkarten werden beispielsweise in der internationalen Norm ISO 7816 spezifiziert. Auch kontaktlose Karten z.B. gemäß dem internationalen Standard ISO 14443 werden als Sicherheitsdokument gemäß der vorliegenden Erfindung verstanden.

Es ist bekannt, zum Schutz der beschriebenen Sicherheitsdokumente gegenüber Fälschung Effektfarben und/ oder außenliegende Reliefstrukturen vorzusehen. So ist in DE 10 2007 037 982 A1 ein Verbundsicherheitsdokument beschrieben, welches zwischen zwei innenliegenden opaken Schichten eine aus einer Folie hergestellte Schicht mit einer Aussparung aufweist. Durch diese Aussparung ergibt sich eine an der Kartenoberfläche haptisch erkennbare hohl-reliefartige Struktur. Um die hohl-reliefartige Struktur optisch wahrnehmen zu können, ist in einem transparenten Oberflächenabschnitt des Laminatkörpers eine Interferenzfarbe eingebracht. Bei diesem vorbekannten Sicherheitsdokument ist jedoch problematisch, dass die optische Qualität des durch die hohl-reliefartige Struktur gebildeten Sicherheitsmerkmals oft unzureichend ist, wodurch das Sicherheitsmerkmal vielfach schlecht erkennbar ist. Das Patentdokument DE 10 2005 045 567 A1 offenbart ein Sicherheitsdokument mit den Merkmalen des Oberbegriffs des Anspruchs 1. Es ist eine Aufgabe der Erfindung, ein Sicherheitsdokument der oben genannten Art sowie ein Verfahren zum Herstellen eines derartigen Sicherheitsdokuments bereitzustellen, womit die vorgenannten Probleme gelöst werden, und insbesondere die Fälschungssicherheit eines Sicherheitsdokuments verbessert werden kann.

Erfindungsgemäß wird die vorgenannte Aufgabe mit einem Sicherheitsdokument nach Anspruch 1, sowie das Verfahren nach Anspruch 15 gelöst. Unter einer Reliefstruktur ist eine erhabene Struktur zu verstehen. Gemäß einer vorteilhaften Ausführungsform weist die Reliefstruktur eine mehrstufige Topographie auf, d.h. es liegen mehrere Höhenniveaus innerhalb der Reliefstruktur vor. Erfindungsgemäß weist die Reliefstruktur eine Höhe oberhalb 2 µm, vorzugsweise oberhalb 10 µm auf und wird mithilfe von geeigneten Druckfarben und/ oder Lacken gebildet.

Die Druckfarb- bzw. Lackschicht, die nachfolgend auch als Relieflack bezeichnet wird, ist unter den Bedingungen eines Laminierverfahrens formstabil. Es wird zwischen Heißlaminierung und Kaltlaminierung unterschieden. Während bei der Heißlaminierung die Folien eines herzustellenden Laminatkörpers bevorzugt auf Temperaturen von ≥ 150° C erwärmt und gleichzeitig mittels Druck aufeinander gepresst werden, wird ein Kaltlaminierverfahren ohne den Einsatz von Hitze durchgeführt. In diesem Fall werden jedoch in der Regel Klebstoffe eingesetzt, die für einen Verbund der einzelnen Folien sorgen. Der Druck wird jeweils parallel zu der Schichtungsrichtung der Folien aufgebracht.

Mittels der erfindungsgemäßen Lackschicht ist es möglich, eine Reliefstruktur mit vergleichsweise großen Steigungsgradienten im Laminatkörper zu erzeugen. Die Reliefstruktur verändert das optische Erscheinungsbild des Laminatkörpers auf charakteristische Weise, insbesondere entsteht ein charakteristischer dreidimensionaler Eindruck. Dies ist besonders eindrucksvoll der Fall, wenn die Lackschicht beispielsweise mit einer optisch variablen Farbe oder einer Hologrammstruktur versehen wird. Die Erkennbarkeit einer derartigen optisch variablen Struktur kann durch die erfindungsgemäße Reliefstruktur wesentlich verbessert werden. Die Reliefstruktur verändert das optische Erscheinungsbild etwa einer optisch variablen Farbe durch strukturelle Änderungen, Störungen oder Inhomogenitäten im Schichtaufbau lokal.

Erfindungsgemäß ist damit ein optisches Sicherheitsmerkmal geschaffen, dessen Überprüfung ohne spezielle Sachkenntnis möglich ist. Eine Echtheitsüberprüfung ist einfach und schnell durchführbar. Damit wird die Fälschungssicherheit des Sicherheitsdokuments wesentlich verbessert.

In einer Ausführungsform nach der Erfindung ist die Lackschicht von einer optisch variablen Struktur bedeckt. Dabei grenzt die optisch variable Struktur unmittelbar an die Lackschicht an.

Gemäß einer vorteilhaften Variante ist die optisch variable Struktur durch eine optisch variable Farbe gebildet. Insbesondere ist die optisch variable Farbe unmittelbar angrenzend auf die Reliefstruktur aufgebracht. Eine optisch variable Farbe erzeugt einen Farbkippeffekt, bei dem die Farbe abhängig vom Betrachtungswinkel variiert. Die Reliefstruktur erzeugt in Verbindung mit der optisch variablen Farbe bei einem festen Betrachtungswinkel einen optischen Effekt, der durch ein charakteristisches Farbspektrum gekennzeichnet ist. Dieser Effekt entsteht durch eine lokale Veränderung der Eigenschaft der optisch variablen Farbe infolge Verformung dieser Schicht. Zusätzlich tritt durch die Reliefstruktur eine Verstärkung der betrachtungswinkelabhängigen Änderung des Farbspektrums auf.

Es kann nach einer Ausführungsform der Erfindung die optisch variable Farbe auf die Reliefstruktur aufgebracht werden, beispielsweise durch ein bekanntes Druckverfahren. Hierzu wird zur Bildung der Reliefstruktur zuerst die Lackschicht auf eine Folie gedruckt. In einem weiteren Schritt erfolgt das zumindest teilweise Überdrucken der Reliefstruktur mit der optisch variablen Farbe.

Alternativ ist es auch denkbar, die Reliefstruktur in Form einer Lackschicht auf die optisch variable Farbe aufzubringen. Das Bedrucken der Folie erfolgt in einem ersten Schritt mit der optisch variablen Farbe. Den weiteren Schritt bildet das zumindest teilweise Überdrucken der optisch variablen Farbe mit der Lackschicht.

Gemäß einer weiteren vorteilhaften Variante der Erfindung werden Reliefstruktur und optisch variable Struktur auf unterschiedlichen Folien aufgebracht und bei der Laminierung derart zusammengeführt, dass die optisch variable Struktur unmittelbar an die Lackschicht angrenzt und diese zumindest teilweise überdeckt. Durch den Vorgang des Laminierens ergibt sich eine dauerhafte Verbindung zwischen der Reliefstruktur und der optisch variablen Struktur, die auch bei sehr detailreichen Reliefstrukturen einen zufriedenstellenden optischen Effekt liefert.

Eine optisch variable Farbe kann beispielsweise durch eine Interferenzfarbe gebildet werden. Eine derartige Interferenzfarbe umfasst sogenannte Interferenzpigmente, die mindestens einen interferenzfähigen, mehrschichtigen Aufbau aufweisen. Die Farbe ist mit einer derart geringen Flächendeckung gedruckt, dass sie im Durchlicht noch erhebliche Anteile des sichtbaren Lichts durchlässt. Die Interferenzpigmente können in einem Teilbereich mittels einer elektromagnetischen Strahlung, beispielsweise eines Lasers, irreversibel so verändert werden, dass sich in diesem Teilbereich der Interferenzeffekt visuell und/ oder maschinell deutlich erkennbar unterscheidet.

In einer weiteren Ausführungsform nach der Erfindung kann auch eine weitere optisch variable Farbe als weitere Schicht oberhalb der ersten optisch variablen Farbe angeordnet werden und diese erste optisch variable Farbe ganz oder teilweise überdecken. Insbesondere kann diese weitere optisch variable Farbe ein Farbspektrum aufweisen, welches im wesentlichen komplementär zu dem Farbspektrum der ersten optisch variablen Farbe liegt.

Gemäß einer alternativen Ausführungsform ist die optisch variable Struktur durch eine Farbe gebildet, die Metallpartikel und/ oder metallisierte Partikel enthält.

Gemäß einer weiteren alternativen Ausführungsform der Erfindung ist die optisch variable Struktur durch eine Farbe gebildet, die magnetisierbare Partikel enthält.

In einer weiteren Ausführungsform nach der Erfindung ist die von der Relieflackschicht gebildete Reliefstruktur derart konfiguriert, dass die Strukturelemente der Reliefstruktur mit dem bloßen Auge nicht auflösbar sind.

In einer weiteren Ausführungsform nach der Erfindung ist die Reliefstruktur durch Dickenvariation des Relieflacks gebildet. Vorteilhafterweise wird der Relieflack im Siebdruckverfahren auf eine Trägerschicht aufgebracht. Als Ergebnis weist der Relieflack Dickenvariationen auf, die zumindest teilweise die Reliefstruktur bilden. Dabei kann die Dicke des Relieflacks im Sinne der Erfindung lokal auch Dicken von Null aufweisen; damit kann die Reliefstruktur auch durch inselförmige Lackabschnitte gebildet werden.

In einer weiteren Ausführungsform nach der Erfindung weist die Relieflackschicht eine Pigmentierung auf. Auf diese Weise kann der Kontrast erhöht und der Reliefeffekt vergrößert werden. Erfindungsgemäß kann die Relieflackschicht dunkle, bevorzugt schwarze Pigmente enthalten, so dass der Kontrast zu der oder den optisch variablen Schichten erhöht wird.

In einer weiteren Ausführungsform nach der Erfindung weist der Laminatkörper eine opake Schicht auf. Vorzugsweise weist die opake Schicht im Bereich der Projektion der Aussparung in Schichtungsrichtung ein transparentes Fenster auf. Damit kann die Reliefstruktur auch im Durchlicht betrachtet werden.

In einer weiteren Ausführungsform nach der Erfindung weist das Sicherheitsdokument durch einen Laserstrahl eingebrachte Kennzeichnungen in Form von Mustern, Buchstaben, Zahlen und/ oder Bildern auf, die aufgrund von durch den Laserstrahl bewirkten, aus Materialumwandlungen resultierenden lokalen Änderungen der optischen Eigenschaften des Sicherheitsdokuments sichtbar sind. Hierzu kann die optisch variable Farbe lokal mit Laserlicht beaufschlagt werden.

Die vorgenannte Aufgabe wird erfindungsgemäß weiterhin durch ein Verfahren zum Herstellen eines Sicherheitsdokuments gelöst, welches die folgenden Schritte aufweist: Aufbringen einer Relieflackschicht auf einer Trägerfolie derart, dass die Relieflackschicht eine Reliefstruktur mit einer Strukturgröße oberhalb 2 µm aufweist, Anordnen mindestens einer weiteren Folie oberhalb der Trägerfolie, sowie Laminieren der Folien mit einem Laminierverfahren zu einem monolithischen Laminatkörper.

Die Relieflackschicht ist vorzugsweise derart formstabil, dass die Reliefstruktur bei dem Laminierverfahren erhalten bleibt. Hinsichtlich der Wirkungsweise des erfindungsgemäßen Verfahrens wird auf die vorstehenden Ausführungen zur Wirkungsweise des erfindungsgemäßen Sicherheitsdokuments verwiesen.

Die bezüglich der vorstehend aufgeführten Ausführungsformen des erfindungsgemäßen Sicherheitsdokuments angegebenen Merkmale können entsprechend auf das erfindungsgemäße Verfahren übertragen werden. Umgekehrt können die bezüglich der vorstehend ausgeführten Ausführungsformen des erfindungsgemäßen Verfahrens angegebenen Merkmale entsprechend auf das erfindungsgemäße Sicherheitsdokument übertragen werden.

Die vorstehenden, sowie weitere vorteilhafte Merkmale der Erfindung werden in der nachfolgenden detaillierten Beschreibung beispielhafter erfindungsgemäßer Ausführungsformen unter Bezugnahme auf die beigefügten schematischen Zeichnungen veranschaulicht. Es zeigt:
- Fig.1: eine Schnittansicht einer Folienanordnung zur Herstellung eines Laminatkörpers in einer ersten Ausführungsform mit einer innenliegend laminierten Reliefstruktur;
- Fig. 2: eine Schnittansicht eines aus der Folienanordnung gemäß Fig. 1 durch einen Laminationsprozess hergestellten Laminatkörpers;
- Fig. 3: eine vergrößerte Ansicht der Reliefstruktur gemäß der Figuren 1 bis 2 in einer Ausführungsform der nicht teil der Erfindung ist;
- Fig. 4: eine vergrößerte Ansicht der Reliefstruktur gemäß der Figuren 1 bis 2 in einer zweiten Ausführungsform; sowie
- Fig. 5: eine Schnittansicht einer Folienanordnung zur Herstellung eines Laminatkörpers in einer dritten Ausführungsform mit einer innenliegend laminierten Reliefstruktur.

In den nachstehend beschriebenen Ausführungsbeispielen sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

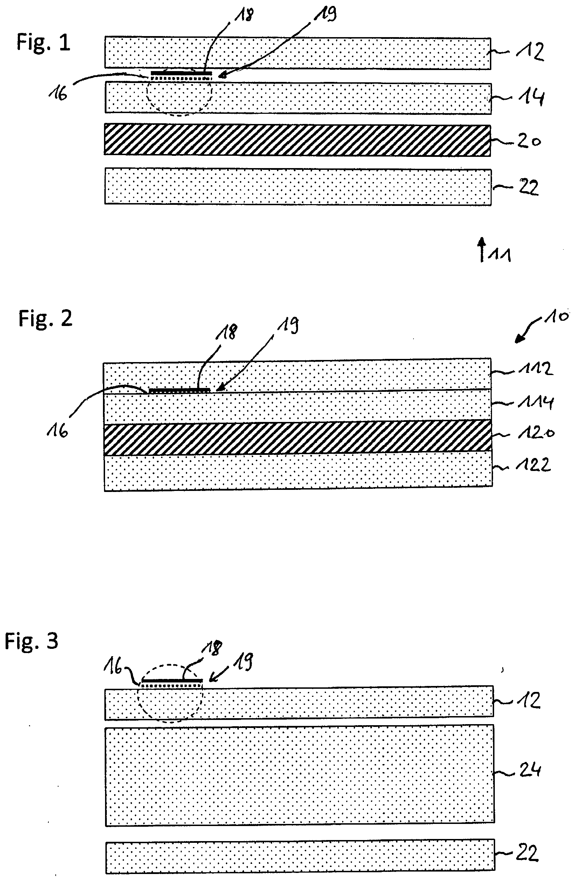

Fig. 1 zeigt eine Folienanordnung in einer ersten Ausführungsform. Die einzelnen Folien werden mittels eines Laminierverfahrens zu dem in Fig. 2 dargestellten Laminatkörper, welcher ein erfindungsgemäßes Sicherheitsdokument 10 bildet, zusammengefügt. Die in Fig. 1 gezeigte Folienanordnung weist eine Reihe von in einer Schichtungsrichtung 11 aufeinander folgenden Folien auf.

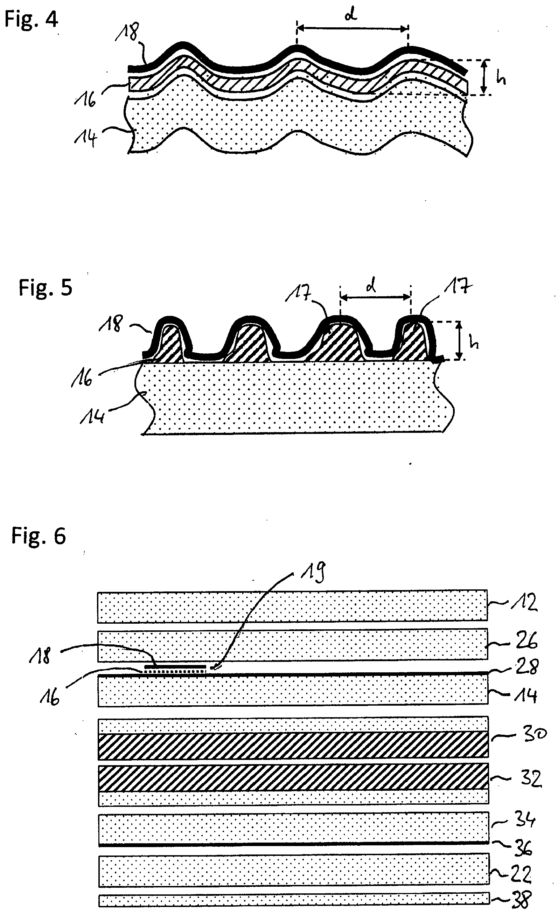

Von oben her beginnend umfasst die Folienanordnung zunächst eine transparente Folie 12. Unterhalb der Folie 12 ist eine weitere Folie 14 angeordnet, die je nach Ausführungsform transparent oder auch opak ausgebildet sein kann. Die Folie 14 weist in einem Flächenabschnitt ein Sicherheitsmerkmal 19 auf. Der Bereich des Sicherheitsmerkmals 19 ist in Fig. 1 mit einem unterbrochenen Kreis gekennzeichnet. Figur 4 zeigt deisen Bereich in einer erfindungsgemäßen Ausführungsform. Relieflack 16 ist derart gewählt, dass die auf die Folie 14 aufgetragene Lackschicht unter den Bedingungen eines Laminierverfahrens formstabil ist. Gemäß einer Ausführungsform der Erfindung kann der Relieflack 16 auch als UV-härtbarer Lack gewählt werden. Hierzu wird der Lack nach dem Auftragen auf die Folie 14 mit einer UV-Lichtquelle bestrahlt und so der Relieflack 16 fixiert.

Durch das Lackieren der geprägten Folie 14 weist der Relieflack 16 eine dem Relief der Folie 14 entsprechende Reliefstruktur auf. Diese Reliefstruktur weist eine Strukturgröße von größer als 2 µm auf. Der Relieflack bildet einen starren Schutz für den geprägten Bereich der Folie 14 und sorgt damit dafür, dass bei dem folgenden Laminierverfahren das Relief der Folie 14 erhalten bleibt.

In der Ausführungsform gemäß Fig. 4 ist der Relieflack 16 im Siebdruckverfahren im Bereich des Sicherheitselements 19 auf die Folie 14, die in diesem Fall eben ist, aufgebracht. In der in Fig. 4 gezeigten Ausführungsform wird die Lackschicht 16 aus einzelnen inselförmigen Reliefelementen 17 gebildet. Die Reliefelemente 17 bilden zusammen die Reliefstruktur. Auch diese Reliefstruktur weist eine Strukturgröße von größer als 2 µm auf. Sowohl die lateralen Abstände d zwischen den einzelnen Reliefelementen 17 als auch die jeweiligen Höhe derselben sind größer als 2 µm. Auch die derart gebildete Reliefstruktur bleibt bei dem nachfolgenden Laminierverfahren formstabil erhalten.

Der Relieflack 16 sowohl gemäß Fig. 4 als auch gemäß Fig. 5 wird mit einer optisch variablen Farbe 18 in Gestalt einer Interferenzfarbe beschichtet. Wie bereits vorstehend beschrieben, umfasst eine derartige Interferenzfarbe sogenannte Interferenzpigmente, die mindestens einen interferenzfähigen, mehrschichtigen Aufbau aufweisen.

Gemäß einer nicht dargestellten Ausführungsform der Erfindung wird der Relieflack 16 mit einer Effektfarbe beschichtet. Die Effektfarbe kann wahlweise oder in Kombination Metall-, Glanz-, Perlglanzpigmente und/ oder Glimmer aufweisen.

Die erfindungsgemäß mittels des Relieflacks 16 gebildete Reliefstruktur ist die Basis dafür, dass auch die optisch variable Farbe 18 mit einer Struktur versehen wird. Das optische Erscheinungsbild der optisch variablen Farbe 18 wird damit durch strukturelle Änderungen, Störungen oder Inhomogenitäten im Schichtaufbau lokal verändert. Das Ergebnis ist eine gut sichtbare dreidimensionale Reliefstruktur.

Gemäß einer alternativen Ausführungsform wird die Folie 14 mit der optisch variablen Farbe 18 bedruckt. In einem weiteren Schritt erfolgt eine Beschichtung mit dem Relieflack 16, die die optisch variable Farbe zumindest teilweise überdeckt. Zur Erzielung der gewünschten optischen Wirkung ist die Folie 14 zumindest lokal transparent bzw. transluzent ausgebildet, so dass die optisch variable Farbe 18 durch die Folie 14 hindurch für das menschliche Auge wahrnehmbar ist.

Gemäß einer weiteren, nicht dargestellten Ausführungsform wird eine optisch variable Schicht nicht direkt auf dem Relieflack 16 und somit auf der Folie 14, sondern auf der weiteren Folie 12 aufgebracht. Bei dem sich anschließenden Laminierverfahren werden Relieflack 16 und optisch variable Schicht direkt aneinander angrenzend und sich zumindest teilweise überdeckend angeordnet und ggf. mit weiteren Schichten zu einem monolithischen Laminatkörper verbunden. Als optisch variable Schicht kann auch in diesem Beispiel eine optisch variable Farbe 18, beispielsweise eine Interferenzfarbe, gewählt werden. Ein Vorteil der Aufteilung des Relieflacks 16 und der optisch variablen Farbe 18 auf zwei unterschiedliche Folien liegt darin, den Druckprozess jeweils optimal steuern und den Relieflack 16 bzw. die optisch variable Farbe 18 unter jeweils angepassten Bedingungen aushärten zu lassen. Gerade bei sehr feinen, detailreichen Motiven ist dieses Verfahren von Vorteil. Die dreidimensionale Reliefstruktur entsteht bei dieser Ausführungsform erst mit der Laminierung beider Schichten.

Alternativ zur optisch variablen Farbe 18 oder auch zusammen mit dieser kann der Relieflack 16 mit einer Metallstruktur versehen werden. Eine derartige Metallstruktur kann erzeugt werden, indem feine Strukturen in einen auf den Relieflack 16 aufgebrachten Prägelack oder ggf. direkt in den Relieflack 16 geschrieben werden. Daraufhin erfolgt eine Bedampfung mit Metall oder einem Dielektrikum. Gemäß einer erfindungsgemäßen Variante ist der Relieflack Teil einer Metallfolie.

Wie bereits vorstehend erwähnt, wird die Folienanordnung gemäß Fig. 1 mittels eines Laminierverfahrens zu dem in Fig. 2 dargestellten, das Sicherheitsdokument 10 bildenden monolithischen Laminatkörper verschmolzen. Der Laminatkörper weist daraufhin aus den entsprechenden Folien gebildete Schichten auf, welche mit den Bezugszeichen 112,114,120 sowie 122 bezeichnet sind. Das den Relieflack 16 und die optisch variable Farbe 18 umfassende Sicherheitselement 19 ist in dieser Ausführungsform innenliegend laminiert angeordnet.

Fig. 5 zeigt eine weitere beispielhafte Ausführungsform einer Folienanordnung zur Herstellung eines Laminatkörpers mit einem innenliegend laminierten Sicherheitselement 19. Diese Folienanordnung umfasst in dieser Reihenfolge drei transparente Folien 12, 26 und 14 mit einer Dicke von jeweils 100 µm. Auf der Oberseite der Folie 14 ist eine Guillochen-Schicht 28 angeordnet. Das den Relieflack 16 sowie die optisch variable Farbe 18 aufweisende Sicherheitselement 19 ist auf der Guillochenschicht 18 angeordnet. Dabei kann das Sicherheitselement 19 beispielsweise in einer der in den Figuren 4 und 5 dargestellten Ausführungsformen gestaltet sein.

Das Sicherheitselement 19 ist in allen Ausführungsformen derart laminiert und geschichtet, dass in Aufsicht für den Betrachter die optisch variable Farbe 18 sichtbar ist und der Relieflack 16 zumindest teilweise unterhalb der optisch variablen Farbe 18 angeordnet ist und durch diese verdeckt wird. Je nach Schichtung der Folienanordnung ist es daher erforderlich, die gewünschten Motive spiegelbildlich auf den Folien 14 bzw. 12 anzuordnen.

## Patentansprüche

1. Sicherheitsdokument (10) mit einem aus mehreren aufeinander folgenden Folien hergestellten monolithischen Laminatkörper, **dadurch gekennzeichnet, dass** der Laminatkörper eine Lackschicht (16) aufweist, welche eine Reliefstruktur (17) bildet und unter den Bedingungen eines Laminierverfahrens formstabil ist, **dadurch gekennzeichnet dass** die Reliefstruktur innenliegend in der Laminatkörper ist und eine Strukturgröße von größer als 2 µm aufweist.

2. Sicherheitsdokument nach Anspruch 1, **dadurch gekennzeichnet, dass** die Lackschicht von einer Effektfarbe bedeckt ist.

3. Sicherheitsdokument nach Anspruch 1 **dadurch gekennzeichnet, dass** die Lackschicht von einer optisch variablen Struktur bedeckt ist.

4. Sicherheitsdokument nach Anspruch 3, **dadurch gekennzeichnet, dass** die optisch variable Struktur durch eine erste optisch variable Farbe gebildet ist.

5. Sicherheitsdokument nach Anspruch 3 oder 4 **dadurch gekennzeichnet, dass** die optisch variable Struktur durch wenigstens eine weitere optisch variable Farbe gebildet ist.

6. Sicherheitsdokument nach Anspruch 3, **dadurch gekennzeichnet, dass** die optisch variable Struktur durch eine Farbe gebildet ist, welche Metallpartikel und/ oder metallisierte Partikel enthält.

7. Sicherheitsdokument nach Anspruch 3, **dadurch gekennzeichnet, dass** die optisch variable Struktur durch eine Farbe gebildet ist, welche magnetisierbare Pigmente enthält.

8. Sicherheitsdokument nach Anspruch 3, **dadurch gekennzeichnet, dass** die optisch variable Struktur durch eine Hologrammstruktur gebildet ist.

9. Sicherheitsdokument nach wenigstens einem der Ansprüche 1 bis 8, **dadurch gekennzeichnet, dass** die von der Lackschicht gebildete Reliefstruktur derart konfiguriert ist, dass die Strukturelemente mit dem bloßen Auge nicht auflösbar sind.

10. Sicherheitsdokument nach wenigstens einem der Ansprüche 1 bis 9, **dadurch gekennzeichnet, dass** die Lackschicht auf einer durch eine Folie gebildeten Trägerschicht angeordnet ist, wobei in die Trägerschicht eine der Reliefstruktur der Lackschicht entsprechende Reliefstruktur eingeprägt ist.

11. Sicherheitsdokument nach wenigstens einem der Ansprüche 1 bis 10, **dadurch gekennzeichnet, dass** die Reliefstruktur durch Dickenvariation des Lacks gebildet ist.

12. Sicherheitsdokument wenigstens einem der nach Ansprüche 1 bis 11, **dadurch gekennzeichnet, dass** die die Reliefstruktur bildende Lackschicht von einer vor dem Laminierverfahren als Folie aufgebrachten zumindest semi-transparenten Schicht bedeckt ist.

13. Sicherheitsdokument nach wenigstens einem der Ansprüche 1 bis 12, **dadurch gekennzeichnet, dass** die die Reliefstruktur bildende Lackschicht an der Außenseite einer im Laminierverfahren aus Folien gebildeten Schichtenfolge angeordnet ist.

14. Verfahren zum Herstellen eines Sicherheitsdokuments (10), mit den Schritten:
- Aufbringen einer Lackschicht (16) auf einer Trägerfolie derart, dass die Lackschicht eine Reliefstruktur (17) mit einer Strukturgröße von größer als 2 µm aufweist,
- Anordnen mindestens einer weiteren Folie oberhalb oder unterhalb der Trägerfolie, sowie
- Laminieren der Folien zu einem monolithischen Laminatkörper, so dass der Laminatkörper ein innenliegendes Sicherheitselement (19) aufweist.

15. Verfahren nach Anspruch 14, **dadurch gekennzeichnet, dass** vor dem Laminieren eine optisch variable Struktur auf die Lackschicht aufgebracht wird, derart, dass sich die optisch variable Struktur und die Lackschicht zumindest teilweise überdecken.

16. Verfahren nach Anspruch 14, **dadurch gekennzeichnet, dass** vor dem Aufbringen der Lackschicht eine optisch variable Struktur auf die Trägerfolie aufgebracht wird, derart, dass sich die optisch variable Struktur und die Lackschicht zumindest teilweise überdecken.

17. Verfahren nach Anspruch 14, **dadurch gekennzeichnet, dass** vor dem Laminieren eine optisch variable Struktur auf der mindestens einen weiteren Folie auf der der Lackschicht zugewandten Seite derart angebracht wird, dass die optisch variable Struktur der Lackschicht gegenüber liegt und nach dem Laminieren die Lackschicht zumindest teilweise überdeckt.

## Claims

1. A security document (10) with a monolithic laminated body manufactured from a plurality of successive foils, **characterized in that** the laminated body has a lacquer layer (16) which forms a relief structure (17) and is dimensionally stable under the conditions of a lamination procedure, **characterized in that** the relief structure is disposed inside the laminated body and has a structure size of larger than 2 µm.

2. The security document according to claim 1, **characterized in that** the lacquer layer is covered by an effect ink.

3. The security document according to claim 1, **characterized in that** the lacquer layer is covered by an optically variable structure.

4. The security document according to claim 3, **characterized in that** the optically variable structure is formed by a first optically variable ink.

5. The security document according to claim 3 or 4, **characterized in that** the optically variable structure is formed by at least one further optically variable ink.

6. The security document according to claim 3, **characterized in that** the optically variable structure is formed by an ink containing metal particles and/or metalized particles.

7. The security document according to claim 3, **characterized in that** the optically variable structure is formed by an ink containing magnetizable pigments.

8. The security document according to claim 3, **characterized in that** the optically variable structure is formed by a hologram structure.

9. The security document according to at least one of the claims 1 to 8, **characterized in that** the relief structure formed by the lacquer layer is configured such that the structure elements are not resolvable with the naked eye.

10. The security document according to at least one of the claims 1 to 9, **characterized in that** the lacquer layer is arranged on a carrier layer formed by a foil, wherein a relief structure corresponding to the relief structure of the lacquer layer is embossed in the carrier layer.

11. The security element according to at least one of the claims 1 to 10, **characterized in that** the relief structure is formed by thickness variation of the lacquer.

12. The security document according to at least one of the claims 1 to 11, **characterized in that** the lacquer layer forming the relief structure is covered by an at least semitransparent layer applied as a foil prior to the lamination procedure.

13. The security document according to at least one of the claims 1 to 12, **characterized in that** the lacquer layer forming the relief structure is arranged on the outside of a layer sequence formed of foils in the lamination procedure.

14. A method for manufacturing a security document (10), with the steps of:
- applying a lacquer layer (16) to a carrier foil such that the lacquer layer has a relief structure (17) with a structure size of larger than 2 µm,
- arranging at least one further foil above or below the carrier foil, and
- laminating the foils to form a monolithic laminated body, so that the laminated body has a security element (19) disposed on the inside.

15. The method according to claim 14, **characterized in that** prior to laminating there is applied an optically variable structure to the lacquer layer, such that the optically variable structure and the lacquer layer overlap at least partially.

16. The method according to claim 14, **characterized in that** prior to applying the lacquer layer there is applied an optically variable structure to the carrier foil, such that the optically variable structure and the lacquer layer overlap at least partially.

17. The method according to claim 14, **characterized in that** prior to laminating there is applied an optically variable structure to the at least one further foil on the side facing the lacquer layer, such that the optically variable structure is disposed opposite of the lacquer layer and overlaps the lacquer layer at least partially after laminating.

## Revendications

1. Document de sécurité (10) ayant un corps stratifié monolithique fabriqué à partir de plusieurs feuilles successives, **caractérisé en ce que** le corps stratifié comporte une couche de vernis (16) qui constitue une structure en relief (17) et est, sous les conditions d'un procédé de laminage, stable en dimensions, **caractérisé en ce que** la structure en relief se trouve à l'intérieur du corps stratifié et présente une taille de structure supérieure à 2 µm.

2. Document de sécurité selon la revendication 1, **caractérisé en ce que** la couche de vernis est recouverte d'une encre à effet.

3. Document de sécurité selon la revendication 1, **caractérisé en ce que** la couche de vernis est recouverte d'une structure optiquement variable.

4. Document de sécurité selon la revendication 3, **caractérisé en ce que** la structure optiquement variable est constituée par une première encre optiquement variable.

5. Document de sécurité selon la revendication 3 ou 4, **caractérisé en ce que** la structure optiquement variable est constituée par au moins une autre encre optiquement variable.

6. Document de sécurité selon la revendication 3, **caractérisé en ce que** la structure optiquement variable est constituée par une encre qui contient des particules métalliques et/ou des particules métallisées.

7. Document de sécurité selon la revendication 3, **caractérisé en ce que** la structure optiquement variable est constituée par une encre qui contient des pigments magnétisables.

8. Document de sécurité selon la revendication 3, **caractérisé en ce que** la structure optiquement variable est constituée par une structure d'hologramme.

9. Document de sécurité selon au moins une des revendications de 1 à 8, **caractérisé en ce que** la structure en relief constituée par la couche de vernis est configurée de telle façon que les éléments de structures ne peuvent pas être distingués à l'oeil nu.

10. Document de sécurité selon au moins une des revendications de 1 à 9, **caractérisé en ce que** la couche de vernis est agencée sur une couche support constituée par une feuille, cependant que, dans la couche support, une structure en relief correspondant à la structure en relief de la couche de vernis est gaufrée.

11. Document de sécurité selon au moins une des revendications de 1 à 10, **caractérisé en ce que** la structure en relief est constituée par des variations d'épaisseur du vernis.

12. Document de sécurité selon au moins une des revendications de 1 à 11, **caractérisé en ce que** la couche de vernis constituant la structure en relief est recouverte par une couche au moins semi-transparente appliquée sous forme de feuille avant le processus de laminage.

13. Document de sécurité selon au moins une des revendications de 1 à 12, **caractérisé en ce que** la couche de vernis constituant la structure en relief est agencée du côté extérieur d'une succession de couches constituée à partir de couches lors d'un processus de laminage.

14. Procédé de fabrication d'un document de sécurité (10), comprenant les étapes :
- application d'une couche de vernis (16) sur une feuille support, de telle façon que la couche de vernis présente une structure en relief (17) ayant une taille de structure supérieure à 2 µm,
- agencement d'au moins une autre feuille au-dessus ou au-dessous de la feuille support, ainsi que
- laminage des feuilles de manière à obtenir un corps stratifié monolithique, de telle sorte que le corps stratifié comporte un élément de sécurité (19) situé à l'intérieur.

15. Procédé selon la revendication 14, **caractérisé en ce que**, avant le laminage, une structure optiquement variable est appliquée sur la couche de vernis, de telle façon que la structure optiquement variable et la couche de vernis se recouvrent au moins partiellement.

16. Procédé selon la revendication 14, **caractérisé en ce que**, avant l'application de la couche de vernis, une structure optiquement variable est appliquée sur la feuille support, de telle façon que la structure optiquement variable et la couche de vernis se recouvrent au moins partiellement.

17. Procédé selon la revendication 14, **caractérisé en ce que**, avant le laminage, une structure optiquement variable est appliquée de telle façon sur la au moins une autre feuille du côté tourné vers la couche de vernis que la structure optiquement variable se trouve en face de la couche de vernis et, après le laminage, recouvre au moins partiellement la couche de vernis.
